# FASCICULE DE BREVET EUROPEEN

(11) **EP 3 895 477 B1**
(45) Date de publication et mention de la délivrance du brevet: **05.08.2026**
(21) Numéro de dépôt: 19842596.9
(22) Date de dépôt: 09.12.2019
(51) Int. Cl.: H04W 48/18, H04W 36/00, H04W 48/12, H04W 84/12, H04W 76/16

(54) **SELECTION D'UN RÉSEAU EN FONCTION DE CARACTÉRISTIQUES RÉSEAU TEMPS RÉEL**
NETZAUSWAHL AUF ECHTZEITEN NETZ PARAMETERN
NETWORK SELECTION BASED ON REAL TIME NETWORK PARAMETERS

(30) Priorité: 10.12.2018 FR 1872579
(43) Date de publication de la demande: 20.10.2021
(73) Titulaire: Orange, 92130 Issy-les-Moulineaux (FR)
(72) Inventeur: BOUVET, Bertrand, 92326 CHÂTILLON CEDEX (FR)
(74) Mandataire: Cabinet Beau de Loménie
(86) Numéro de dépôt international: PCT/FR2019/052962
(87) Numéro de publication internationale: WO 2020/120884

(56) Documents cités:
- EP-A1- 2 192 807
- US-A1- 2004 066 756
- US-A1- 2011 310 840
- US-A1- 2015 215 832
- US-A1- 2017 048 127
- "UMTS", 1 January 2007, ISTE, London, UK, ISBN: 978-1-90-520971-2, article "Chapter 11 - Measurements and Procedures of the UE in RRC Modes", pages: 291 - 320, XP055109651, DOI: 10.1002/9780470612279.ch11
- "3rd Generation Partnership Project; Technical Specification Group Services and System Aspects; General Packet Radio Service (GPRS) enhancements for Evolved Universal Terrestrial Radio Access Network (E-UTRAN) access (Release 16)", 5 December 2018 (2018-12-05), XP051609729, Retrieved from the Internet <URL:http://www.3gpp.org/ftp/tsg%5Fsa/WG2%5FArch/Latest%5FSA2%5FSpecs/DRAFT%5FINTERIM/Archive/23401%2Dg10%5FCRs%5FImplemented%2Ezip> [retrieved on 20181205]

## Description

### Technique antérieure

L'invention se rapporte au domaine général des télécommunications. Elle concerne plus particulièrement le domaine du délestage des communications, usuellement nommé en anglais « offload ».

Une majorité des terminaux disponibles actuellement sur le marché peuvent se connecter à des réseaux d'accès de différentes technologies, tels qu'un réseau d'accès WiFi, un réseau d'accès filaire (en fibre optique, ADSL ou Ethernet), ou un réseau d'accès cellulaire (3G, 4G ou 5G par exemple). De tels terminaux disposent d'un module de sélection du réseau d'accès.

De plus, il existe des terminaux qui peuvent être connectés simultanément à deux réseaux d'accès. Cette fonctionnalité est connue sous le nom d'agrégation de réseau d'accès. De tels terminaux disposent d'un module d'agrégation.

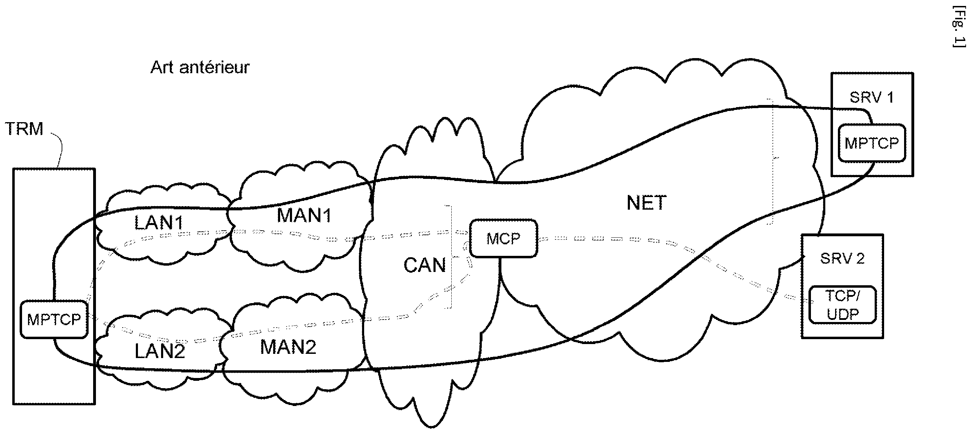

La **figure 1** présente une architecture d'un réseau de l'art antérieur. Un terminal TRM disposant d'un module de sélection de réseau d'accès et d'un module d'agrégation, peut se connecter alternativement ou simultanément à deux réseaux d'accès LAN1 et LAN2. Le terminal TRM se connecte à un réseau cœur CAN via au moins un des réseaux LAN1 et LAN2. Le réseau CAN est connecté à un autre réseau NET. Deux serveurs SRV1 et SRV2 sont connectés au réseau NET. Le réseau NET peut être le réseau Internet. Dans cet exemple, le réseau CAN est un réseau cœur géré par un même opérateur que les réseaux d'accès LAN1 et LAN2.

Dans l'exemple de la figure 1, le module d'agrégation du terminal TRM déploie le protocole MPTCP (pour « Multi Path Transport Control Protocol » en anglais) défini par l'IETF (norme RFC6824). De nos jours, les terminaux Apple (marque déposée) utilisent ce protocole MPTCP. Cependant, pour agréger le trafic entre le terminal et un serveur SRV1 par exemple, il est nécessaire que ce serveur SRV1 supporte aussi ce même protocole MPTCP.

Lorsque le terminal TRM souhaite communiquer avec un serveur, SRV2 par exemple, qui ne supporte pas le protocole MPTCP, le trafic émis par le terminal TRM en agrégation sur les réseaux d'accès LAN1 et LAN2, est acheminé vers un équipement MCP (pour « MPTCP Convergent Point » en anglais) qui permet d'assurer l'interfonctionnement entre le protocole MPTCP et un protocole standard TCP/UDP/SCTP supporté par le serveur SRV2. L'équipement MCP est un nœud du réseau CAN et il est aussi connecté au réseau NET.

La fonction d'agrégation de réseaux d'accès permet en particulier de gérer les pics de trafic et d'assurer la transition du trafic d'un réseau d'accès à un autre, la transition pouvant être partielle ou complète.

Il existe d'autres solutions techniques permettant la sélection et/ou l'agrégation de réseaux d'accès telles que la solution 3GPP release 13 de type LWA (pour « LTE WLAN Aggregation »), la solution Google BandwidthX et la solution Passpoint définie par le groupe de standardisation WiFi Alliance (marques déposées).
Le document « Chapter 11 - Measurements and Procedures of the UE in RRC Modes » publié le 1^{er} janvier 2007 décrit des mesures et des procédures effectuées par un terminal dans des modes du protocole RRC utilisé pour les communications entre les terminaux UE et les stations de base.
Le document « 3rd Genaration PARTNERSHIP Project : Technical Specification Group Services and Systems Aspects ; General Packet Radio Service (GPRS) enhancements for Evolved Universal Terrestrial Acces Network (E-UTRAN) access Release 16 publie le 5 décembre 2018 décrit une procédure d'attachement d'un terminal à un réseau LTE. Le document US 2015/215832 A1 décrit la transmission de la charge d'un réseau au terminal pour faciliter la sélection d'un réseau.

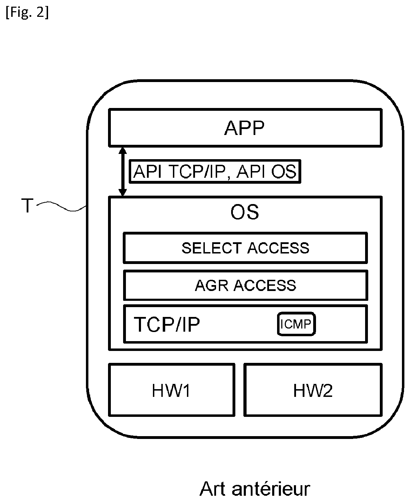

La **figure 2** illustre une architecture logicielle d'un terminal T de l'art antérieur, pouvant être connecté simultanément à plusieurs réseaux d'accès. Dans cet exemple, le terminal T dispose de deux interfaces réseau d'accès HW1 et HW2. L'interface HW1 est un circuit électrique (chipset) de technologie WiFi, et l'interface HW2 est un circuit électrique (chipset) de technologie radio cellulaire, les deux circuits étant accompagnés de leurs logiciels de commande (driver).

Un système d'exploitation OS est installé au-dessus des interfaces HW1 et HW2. Un module d'une pile protocolaire TCP/IP est intégré dans le système d'exploitation OS. Le module TCP/IP intègre un sous module ICMP (pour « Internet Control Message Protocol » en anglais). Au-dessus du module TCP/IP, un module de sélection d'accès et un module d'agrégation d'accès (en MPTCP par exemple) sont aussi intégrés sans le système d'exploitation.

Au-dessus du système d'exploitation OS, une ou plusieurs applications APP sont installées. Ces applications s'appuient sur des interfaces APIs fournies par le système d'exploitation. Parmi ces APIs, on retrouve l'API TCP/IP qui permet à une application APP de communiquer sur au moins un des réseaux d'accès sans savoir spécifiquement quelle interface d'accès HW1 ou HW2 est utilisée.

A noter qu'une application APP peut obtenir via les API, des informations sur l'état de la connectivité avec les réseaux d'accès. De plus les APIs autres que l'API TCP/IP peuvent fournir aux applications en mode « pull », « push », ou « notification » l'interface réseau d'accès couramment utilisée, HW1 et/ou HW2. Ainsi l'application APP peut adapter ses services en fonction du réseau d'accès. Par exemple, une application de voix sur IP (VoIP) installée sur un terminal TRM de type smartphone peut n'émettre/recevoir des communications que lorsque l'interface réseau d'accès sélectionnée est HW1 de technologie WiFi et non pas l'interface d'accès radio cellulaire HW2.

Lorsque la sélection d'un réseau d'accès et la fonction d'agrégation d'accès ne sont pas optimisées, la qualité d'expérience de l'utilisateur du terminal peut se dégrader : sélection d'un réseau d'accès qui n'offre pas la meilleure qualité de service, ou sélection d'un réseau dont le coût de connexion ne correspond pas à des contraintes de l'utilisateur et/ou à des paramètres d'un compte de l'utilisateur auprès de l'opérateur du réseau.

Il existe donc un besoin en une solution permettant aux terminaux pouvant être connectés simultanément à plusieurs réseaux d'accès d'optimiser la sélection de réseau d'accès, et aussi l'agrégation d'accès.

### Exposé de l'invention

L'invention, décrite dans les revendications, vise un procédé de sélection d'au moins un réseau d'accès. Le procédé est mis en œuvre par un terminal pouvant être connecté à plusieurs réseaux d'accès et comprend des étapes de:
-- réception d'au moins un paquet dit d'information, en provenance d'un dispositif de fourniture d'informations caractéristiques d'un dit réseau d'accès, le terminal étant connecté à ce réseau d'accès ; et
-- en fonction des informations caractéristiques obtenues à partir du paquet d'information, au moins une étape parmi :
   - maintien d'une connexion à au moins un réseau d'accès auquel le terminal est déjà connecté ; et
   - connexion à au moins un autre dit réseau d'accès de technologie différente, lesdites informations caractéristiques (infoA, infoB) d'un dit réseau d'accès comportant au moins des informations parmi:
-- des informations (infoB) sur des paramètres d'un compte utilisateur dudit terminal (T1) sur ledit réseau d'accès ;
-- des informations (infoA) sur un état de connectivité d'au moins un terminal (T1, T2, T3) audit réseau d'accès (LAN2) ; et
-- des informations (infoA) sur des paramètres temps réel de performance dudit réseau d'accès.

Corrélativement, l'invention vise un terminal pouvant être connecté à plusieurs réseaux d'accès et caractérisé en ce qu'il comporte :
-- un module de communication configuré pour recevoir au moins un paquet dit d'information, en provenance d'un dispositif de fourniture d'informations caractéristiques d'un dit réseau d'accès, le terminal étant connecté à ce réseau d'accès;
-- un module de traitement configuré pour obtenir les informations caractéristiques à partir du paquet d'information; et
-- un module de gestion de connectivité configuré pour effectuer au moins une action parmi :
   - maintenir une connexion à au moins un réseau d'accès auquel le terminal est déjà connecté ;
   - connecter le terminal à au moins un autre dit réseau d'accès de technologie différente,
lesdites informations caractéristiques (infoA, infoB) d'un dit réseau d'accès comportant au moins des informations parmi:
-- des informations (infoB) sur des paramètres d'un compte utilisateur dudit terminal (T1) sur ledit réseau d'accès ;
-- des informations (infoA) sur un état de connectivité d'au moins un terminal (T1, T2, T3) audit réseau d'accès (LAN2) ; et
-- des informations (infoA) sur des paramètres temps réel de performance dudit réseau d'accès.

Les caractéristiques et avantages du procédé de sélection selon l'invention présentés ci-après s'appliquent de la même façon au terminal selon l'invention, et vice versa.

Le terminal est initialement connecté à au moins un réseau d'accès à partir duquel il reçoit le paquet d'information. Si le terminal est initialement connecté à un seul réseau d'accès, en fonction des informations caractéristiques:
- soit le terminal reste connecté à ce seul réseau d'accès ;
- soit le terminal se déconnecte de ce réseau et se connecte à un autre réseau d'accès ;
- soit le terminal reste connecté au premier réseau et se connecte aussi à un deuxième réseau.

L'invention permet ainsi au terminal d'optimiser la sélection et l'agrégation d'accès grâce aux informations caractéristiques obtenues à partir du paquet d'information. La qualité d'expérience de l'utilisateur du terminal sera alors améliorée.

En particulier, le terminal peut adapter le fonctionnement d'applications logicielles qui sont installées sur ce terminal en fonction des informations caractéristiques obtenues, par exemple lorsque une information caractéristique obtenue concerne la bande passante allouée par le réseau d'accès au terminal, le terminal peut choisir un codeur vidéo et/ou un codeur audio à utiliser par une application, le codeur étant compatible avec cette bande passante.

Conformément à l'invention, le terminal peut être un téléphone mobile de type smartphone, un ordinateur, une tablette, ou tout autre dispositif communicant configuré à pouvoir être connecté alternativement ou simultanément à deux réseaux d'accès ou plus.

Des informations d'abonnement auprès du réseau font partie des caractéristiques d'un réseau d'accès. Les paramètres d'un compte utilisateur peuvent comporter un paramètre issu d'une base de données de type SPR (pour « Subscription Profile Repository » en anglais) pour le contrôle d'accès et de facturation. Les paramètres de compte utilisateur comportent une date de référence pour une mise à jour de comptabilisation du trafic émis et/ou reçu par le terminal. L'invention permet donc d'éviter une sélection d'un réseau d'accès auquel l'utilisateur ne souhaite pas se connecter pour des raisons financières.

L'obtention, par le terminal mettant en œuvre le procédé de l'invention, dit premier terminal, de l'état de connectivité d'un autre terminal au réseau d'accès, permet au premier terminal de déduire les éventuelles interférences entre les deux terminaux et d'adapter ainsi la sélection d'un réseau d'accès et l'agrégation d'accès pour éviter ou réduire l'impact de ces interférences.

Aussi, le terminal mettant en œuvre le procédé de sélection conforme à l'invention, peut obtenir des informations sur sa propre connectivité au réseau d'accès, par exemple un indicateur de type CSI (pour « Channel State Indicator ») sur le canal avec lequel il est connecté à ce réseau, une information sur le débit consommé par le terminal, un pourcentage du débit consommé par le terminal par rapport à un débit global consommé sur une interface LAN partagée entre plusieurs terminaux connectés au réseau d'accès, un pourcentage du débit consommé par le terminal par rapport à un débit global consommé sur une interface de connexion du réseau d'accès à un réseau WAN, etc.

Les informations sur les paramètres temps réel de performance du réseau d'accès peuvent comporter des informations sur le débit de connexion offert par le réseau d'accès (pour le sens descendant et/ou le sens montant, débit par fenêtre de temps prédéfinie), le nombre total de terminaux connectés à ce réseau, le nombre de terminaux connectés et actifs sur le réseau d'accès (actifs dans le sens où ils sont en train d'envoyer et/ou de recevoir des paquets), les caractéristiques de connexion de ce réseau d'accès à un réseau cœur WAN ou à un réseau métropolitain MAN, le débit de synchronisation du réseau d'accès, la latence de traitement ou d'acheminement d'un paquet via ce réseau, etc. Ces paramètres de performance du réseau d'accès sont des paramètres dynamiques relatifs à un état du réseau d'accès à temps réel, c'est-à-dire à l'instant d'émission du paquet.

De ce fait, l'invention permet au terminal d'obtenir des informations de différentes natures, lui permettant d'optimiser sa sélection et son agrégation d'accès.

Contrairement aux solutions de l'art antérieur, les informations caractéristiques obtenues par le terminal ne sont pas estimées ou calculées par le terminal même, mais elles sont obtenues à partir du paquet d'information reçu en provenance du dispositif de fourniture de ces informations. L'invention permet donc de fournir au terminal des informations plus complètes et précises.

L'invention vise également un procédé de fourniture d'informations caractéristiques d'un réseau d'accès, le procédé étant mis en œuvre par un dispositif d'un réseau comportant le réseau d'accès, le procédé comprenant des étapes de:
-- insertion des informations caractéristiques dans un champ d'un paquet dit d'information ; et
-- envoi du paquet d'information à un terminal connecté au réseau d'accès,
les informations caractéristiques comportant au moins une information parmi :
-- une information représentative de paramètres temps réel de performance du réseau d'accès ;
-- une information représentative d'un nombre de terminaux connectés au réseau d'accès ;
-- une information représentative d'un compte utilisateur du terminal sur le réseau d'accès ;
-- une information représentative d'une connectivité du réseau d'accès à un réseau WAN ; et
-- une information représentative d'un état d'une file d'émission de trafic au niveau du dispositif de fourniture d'informations caractéristiques.

Corrélativement l'invention vise un dispositif de fourniture d'informations caractéristiques d'un réseau d'accès, ce dispositif étant compris dans un réseau comportant le réseau d'accès et comprenant :
-- des moyens d'insertion configurés pour insérer les informations caractéristiques dans un champ d'un paquet dit d'information; et
-- des moyens de communication configurés pour envoyer le paquet d'information à un terminal connecté au réseau d'accès ,
les informations caractéristiques comportant au moins une information parmi :
-- une information représentative de paramètres temps réel de performance du réseau d'accès ;
-- une information représentative d'un nombre de terminaux connectés au réseau d'accès ;
-- une information représentative d'un compte utilisateur du terminal sur le réseau d'accès ;
-- une information représentative d'une connectivité du réseau d'accès à un réseau WAN ; et
-- une information représentative d'un état d'une file d'émission de trafic au niveau du dispositif conforme à l'invention.

Les caractéristiques et avantages du procédé de sélection selon l'invention s'appliquent de la même façon au procédé de fourniture d'informations caractéristiques selon l'invention et vice-versa. Les caractéristiques et avantages du procédé de fourniture d'informations caractéristiques selon l'invention présentés ci-après s'appliquent de la même façon au dispositif selon l'invention, et vice versa.

L'invention a une application avantageuse dans le cas où un groupe de plusieurs terminaux, dont le terminal conforme à l'invention, partagent un même compte de facturation, par exemple des terminaux correspondants à un même compte utilisateur, ou des terminaux de plusieurs utilisateurs (membres d'une famille) souscrits à un même forfait. L'invention permet au terminal conforme à l'invention, par l'obtention des informations sur des paramètres de son compte utilisateur, d'obtenir des informations sur sa consommation et sur la consommation de son groupe de terminaux, et donc d'optimiser la sélection d'un réseau d'accès et/ou l'agrégation d'accès. Nous notons que les solutions de l'art antérieur ne permettent pas à un terminal d'obtenir des informations sur la consommation des autres terminaux de son groupe.

Dans un mode de réalisation de l'invention, le procédé de sélection mis en œuvre par le terminal (le procédé et le terminal étant conformes à l'invention) comporte en outre des étapes de :
-- insertion, dans un champ d'un paquet dit d'interrogation, d'un type d'informations caractéristiques demandées;
-- envoi du paquet d'interrogation audit dispositif de fourniture des informations caractéristiques, le paquet d'information étant reçu en réponse au paquet d'interrogation.

Dans un mode de réalisation de l'invention :
-- le module de traitement du terminal conforme à l'invention, est configuré en outre pour insérer, dans un champ d'un paquet dit d'interrogation, un type d'informations caractéristiques demandées; et
-- le module de communication du terminal est configuré en outre pour envoyer ce paquet d'interrogation au dispositif de fourniture des informations caractéristiques, le paquet d'information étant reçu en réponse au paquet d'interrogation.

Ainsi, l'invention permet au terminal de choisir les informations dont il a besoin, et de n'obtenir que celles-ci. La taille du paquet d'information et le temps de traitement de celui-ci par le dispositif de fourniture et par le terminal sont alors optimisés par rapport au besoin.

Dans un mode de réalisation de l'invention, le procédé de fourniture d'informations caractéristiques conforme à l'invention, est mis en œuvre suite à une réception par le dispositif conforme à l'invention, d'un paquet dit d'interrogation, comportant une demande des informations caractéristiques. Ce mode permet au dispositif conforme à l'invention de n'envoyer des paquets d'informations que lorsqu'il est sollicité.

Dans d'autres modes, décrits ci-après, le dispositif conforme à l'invention fournit les informations au terminal de façon automatique, sans demande explicite du terminal.

Dans un mode de réalisation, le procédé de fourniture conforme à l'invention, est mis en œuvre suite à un changement d'un état d'activité d'une interface de connexion du dispositif conforme à l'invention à un réseau WAN, le dispositif étant compris dans le réseau d'accès.

En effet, lorsqu'une interface WAN du dispositif conforme à l'invention est mise en marche ou en arrêt, ou lorsque ses paramètres de synchronisation sont modifiés, les paramètres de connectivité du réseau d'accès au réseau WAN changent et les performances de qualité du réseau d'accès changent également, l'interface WAN permettant de connecter le réseau d'accès au réseau WAN. Ce mode permet donc d'avertir le terminal de ces changements, afin que celui-ci adapte sa sélection et son agrégation d'accès.

Dans un mode de réalisation, le procédé de fourniture, conforme à l'invention, est mis en œuvre suite à une évolution d'une bande passante allouée par le réseau d'accès au terminal conforme à l'invention.

La bande passante peut évoluer en fonction de la consommation de trafic par le terminal et/ou en fonction d'une évolution au niveau du compte de l'utilisateur du terminal. En effet, la bande passante peut être réduite ou augmentée pour répondre à un critère de performance du réseau, telle que la qualité de service QoS, le débit de transmission de paquets, ou la latence, ou pour adapter la bande à un critère financier relatif au compte utilisateur, par exemple lorsque l'utilisateur atteint une limite d'un forfait auquel il a souscrit. De plus, la bande allouée au terminal peut être modifiée en raison d'un changement du compte utilisateur à l'initiative de l'utilisateur (résiliation ou achat d'un forfait) ou à l'initiative d'un opérateur du réseau (modification d'un forfait).

Dans un mode de réalisation, le procédé de fourniture conforme à l'invention, est mis en œuvre suite à une évolution au niveau d'un module de facturation du compte de l'utilisateur du terminal, par exemple lorsque le terminal se connecte à un réseau d'accès en situation d'itinérance (roaming), ou lorsque le terminal communique avec une plateforme d'un service payant qui n'est pas compris dans un forfait associé à son compte utilisateur.

Dans un mode de réalisation, le procédé de fourniture, conforme à l'invention, est mis en œuvre suite à une évolution d'une fonction d'agrégation de réseaux pour connecter le dispositif conforme à l'invention à un réseau WAN.

En effet, une modification du réseau WAN auquel le réseau d'accès est connecté impacte les performances du réseau d'accès et donc le traitement des paquets émis/reçus par le terminal via ce réseau d'accès.

Dans un mode de réalisation, le procédé de fourniture, conforme à l'invention, est mis en œuvre suite à une détection d'un changement de volumétrie de trafic à écouler par le dispositif conforme à l'invention.

En effet, cette volumétrie impacte la capacité du dispositif à traiter les paquets d'information et les paquets d'interrogation. De plus, lorsque le dispositif conforme à l'invention est compris dans le réseau d'accès, cette volumétrie impacte les performances du réseau d'accès.

Dans un mode de réalisation, le procédé de fourniture, conforme à l'invention, est mis en œuvre suite à une connexion ou à un renouvellement de connexion d'un terminal sur une interface de connexion LAN du dispositif conforme à l'invention, le dispositif étant compris dans le réseau d'accès. En effet, le nombre de terminaux connectés au dispositif sur son interface de réseau d'accès impacte les performances de ce réseau, ainsi que celle du dispositif.

Dans un mode de réalisation, le procédé de fourniture, conforme à l'invention, est mis en œuvre suite à un changement d'un nombre d'entrées de type NAPT (pour « Network Address Port Translation » en anglais) au niveau du dispositif conforme à l'invention. Nous rappelons que le nombre d'entrées de type NAPT peut évoluer suite à un changement du nombre de terminaux connectés, ou suite à un changement d'une caractéristique de connectivité d'un terminal déjà connecté, telle que le débit de connexion. Ce mode peut notamment être mis en œuvre lorsque le dispositif conforme à l'invention supporte le protocole IPv4.

Dans un mode de réalisation, le procédé de fourniture conforme à l'invention, est mis en œuvre suite à une réception par le dispositif conforme à l'invention d'un message de type « Routeur Sollicitation » (RS). Ce mode peut être mis en œuvre lorsque le dispositif conforme à l'invention est un routeur qui supporte le protocole IPv6. Nous rappelons qu'un message de type RS est émis par un terminal pour demander à un routeur d'annoncer sa présence.

Dans un mode de réalisation, le procédé de fourniture conforme à l'invention, est mis en œuvre suite à une émission par le dispositif conforme à l'invention d'un message de type « Routeur Advertisement » (RA). Ce mode peut être mis en œuvre lorsque le dispositif conforme à l'invention est un routeur qui supporte le protocole IPv6. Nous rappelons qu'un message de type RA est émis par un routeur périodiquement ou en réponse à un message de type RS, pour annoncer sa présence.

Dans un mode de réalisation, le procédé de fourniture conforme à l'invention, est mis en œuvre suite à une détection d'un message de type Neighbor Discovery (ND) ou de type Neighbor Solicitation (NS). Ce mode peut être mis en œuvre lorsque le dispositif conforme à l'invention est un routeur qui supporte le protocole IPv6. Nous rappelons que les messages de type ND et NS sont utilisés par un routeur pour communiquer avec d'autres routeurs qui lui sont des voisins.

Dans un mode de réalisation, le procédé de fourniture conforme à l'invention, est mis en œuvre suite à un écoulement d'une période déterminée depuis le dernier envoi d'un paquet d'information. Ce mode permet au dispositif conforme à l'invention, d'envoyer des paquets d'information au terminal conforme à l'invention, périodiquement ou à des instants prédéfinis.

Dans un mode de réalisation, le paquet d'information et/ou le paquet d'interrogation sont conformes à un protocole de supervision du protocole Internet par exemple le protocole ICMP (pour « Internet Control Message Protocol » en anglais).

Nous rappelons que le protocole ICMP fait partie intégrante des piles logicielles TCP/IP. Ce protocole ICMP, de la 3^{ème} couche du modèle OSI, permet aux routeurs d'envoyer des messages d'erreurs ou de supervision à d'autres routeurs ou ordinateurs. Les paquets ICMP sont encapsulés dans des datagrammes IP et ils sont utilisés avec des paquets IP. En effet, comme le protocole IP (dans ses deux versions IPv4 et IPv6) ne gère que le transport des paquets, les paquets ICMP sont utilisés en accompagnement des paquets IP pour l'envoi de messages d'erreur ou de supervision.

Ainsi, l'invention est compatible avec les protocoles ICMP, IPv4 et IPv6, et peut donc être facilement mise en œuvre par des terminaux et des dispositifs actuellement disponibles sur le marché avec des modifications mineures pour insérer, récupérer et traiter les informations caractéristiques des réseaux d'accès.

Aussi, l'invention est compatible avec le protocole d'agrégation MPTCP.

Aussi, l'invention peut être appliquée quelle que soit la technologie du réseau d'accès : WiFi, cellulaire, Ethernet, satellite, câble, xDSL, fibre, etc.

Aussi, l'invention peut être compatible avec les mécanismes combinatoires de tunnel, permettant de passer d'un protocole parmi les protocoles IPv4, IPv6 et GTP (pour « GPRS Tunneling Protocol » en anglais) à un autre.

L'invention est aussi compatible avec les mécanismes de sécurisation de l'état de la technique, tels que les protocoles IPSec (pour « Internet Protocol Security), sRTP (pour « Secured Real Time Protocol »), SIPS (pour « Session Initiation Protocol Secured »), HTTPS (pour « Hyper Text Transfer Protocol Secured »), et TLS (pour « Transport Layer Security »).

Conformément à l'art antérieur, un datagramme IP qui encapsule un paquet ICMP comporte un entête IP et le paquet ICMP. Le paquet ICMP comporte :
-- un champ « type de message ICMP » qui code la nature du paquet ICMP, par exemple le type « 3 » indique une destination inaccessible ;
-- un champ « code de l'erreur » comportant des informations complémentaires au champ type et précise la cause de l'envoi du paquet ICMP, par exemple en complément au type 3, le code 2 indique protocole inaccessible, et le code 3 indique port inaccessible ;
-- un champ « somme de contrôle » (checksum) calculée sur la partie spécifique à ICMP sans l'entête IP permettant de vérifier l'intégrité du paquet ; et
-- un champ optionnel de données.

Dans l'état actuel de la technique, il existe deux versions de paquets ICMP : les paquets ICMP v4 (spécification IETF RFC 792) qui accompagnent des paquets IPv4, et des paquets ICMP v6 (spécification IETF RFC 4443) qui accompagnent des paquets IPv6. Dans le cas d'un paquet ICMP v4 encapsulé dans un datagramme IP, le champ « protocole » de l'entête IPv4 comporte le code « 1 » pour indiquer que ce datagramme IP encapsule un paquet ICMP. Dans le cas d'un paquet encapsulé ICMP v6, le champ « entête suivant » de l'entête IPv6 comporte le code « 58 » pour indiquer que le datagramme IP encapsule un paquet ICMP.

Dans le mode de réalisation de l'invention où le paquet d'information est conforme au protocole ICMP, le champ type peut comporter une information pour préciser qu'il s'agit d'un paquet d'information. Le champ code peut comporter une information pour indiquer la raison d'envoi de ce paquet d'information, ou le type des informations caractéristiques fournies dans ce paquet d'information. Le champ de données peut comporter les informations caractéristiques du réseau d'accès.

Dans le mode où le paquet d'interrogation est conforme au protocole ICMP, le champ type peut comporter une information pour préciser qu'il s'agit d'un paquet d'interrogation. Le champ de données peut comporter le type des informations caractéristiques demandées par le terminal. Alternativement, le champ type peut comporter une information qui précise à la fois qu'il s'agit d'un paquet d'interrogation, ainsi que le type des informations demandées.

Il est à noter que le champ « type » d'un paquet ICMP est constitué de 8 bits, donc il permet de supporter 256 valeurs possibles. Vu les valeurs utilisées actuellement par des méthodes de l'état de la technique, il y a encore de la marge pour utiliser ce champ pour les procédés de la présente invention. Le champ « données » d'un paquet ICMP est optionnel et de longueur variable.

Dans un autre mode alternatif à l'utilisation du protocole ICMP, les paquets d'information et d'interrogation peuvent être échangés entre le terminal et le dispositif, conformes à l'invention, selon un nouveau protocole propriétaire. Ce protocole peut s'appuyer par exemple sur les protocoles de transport TCP, UDP (pour « User Datagram Protocol» en anglais) ou SCTP (pour « Stream Control Transport Protocol » en anglais). Cependant une application logicielle qui écoute sur un port TCP, UDP ou SCTP est requise au niveau du terminal et au niveau du dispositif.

Alternativement, les informations caractéristiques peuvent être envoyées par le dispositif au terminal conforme à l'invention, en utilisant un mécanisme de notification, par exemple le mécanisme APNS (pour « Apple Push Notification Server » en anglais) proposé par Apple ou le mécanisme FCM (pour « Firebase Cloud Messaging» en anglais) proposé par Google (marques déposées). Dans ce cas, une plate-forme de notification est nécessaire.

Le dispositif de fourniture d'informations conforme à l'invention peut comporter :
-- un équipement de terminaison de réseau, un tel équipement est commercialisé en France sous le nom de « box » offrant de multiples services, tel qu'un équipement LiveBox (produit commercialisé d'Orange) ;
-- un point d'accès d'un réseau d'accès cellulaire, telle qu'une antenne de type eNodeB ; ou
-- un routeur.

L'invention vise également un système de fourniture d'informations caractéristiques d'un réseau d'accès. Ce système comporte au moins un terminal conforme à l'invention et au moins un dispositif de fourniture d'informations conforme à l'invention.

L'invention vise également un premier programme d'ordinateur sur un support d'enregistrement, ce programme étant susceptible d'être mis en œuvre dans un ordinateur ou un terminal conforme à l'invention. Ce programme comporte des instructions adaptées à la mise en œuvre d'un procédé de sélection tel que décrit ci-dessus.

L'invention vise également un deuxième programme d'ordinateur sur un support d'enregistrement, ce programme étant susceptible d'être mis en œuvre dans un ordinateur ou un dispositif de fourniture d'informations conforme à l'invention. Ce programme comporte des instructions adaptées à la mise en œuvre d'un procédé de fourniture d'informations tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du premier ou du deuxième programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution du procédé de réponse conforme à l'invention ou du procédé de fourniture d'un élément de réponse conforme à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1, déjà décrite, illustre une architecture d'un réseau de l'art antérieur supportant le protocole MPTCP ;
[Fig. 2] la figure 2, déjà décrite, illustre une architecture logicielle d'un terminal de l'art antérieur, pouvant se connecter simultanément à plusieurs réseaux d'accès ;
[Fig. 3] la figure 3 illustre une architecture d'un réseau dans lequel les procédés de l'invention sont mis en œuvre selon un premier mode de réalisation de l'invention ;
[Fig. 4] la figure 4 est un organigramme représentant des étapes des procédés de l'invention, mis en œuvre selon le premier mode de réalisation ;
[Fig. 5] la figure 5 illustre une architecture d'un réseau dans lequel les procédés de l'invention sont mis en œuvre selon un deuxième mode de réalisation de l'invention ;
[Fig. 6] la figure 6 présente des architectures fonctionnelles d'un système de gestion, d'un terminal et d'un dispositif de gestion, conformes à l'invention;
[Fig. 7] la figure 7 présente une architecture matérielle d'un terminal conforme à l'invention, selon un mode de réalisation de l'invention; et
[Fig. 8] la figure 8 présente une architecture matérielle d'un dispositif conforme à l'invention, selon un mode de réalisation de l'invention.

### Description des modes de réalisation

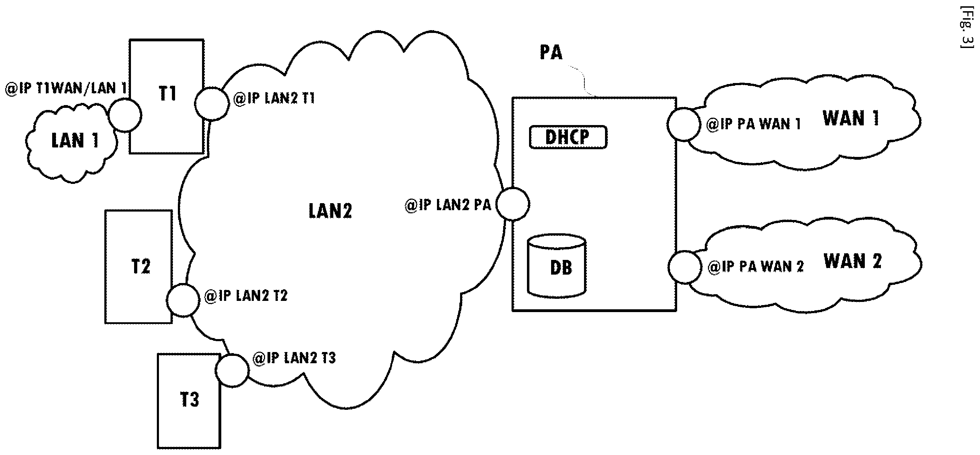

La **figure 3** illustre une architecture d'un réseau dans lequel les procédés de l'invention sont mis en œuvre selon un premier mode de réalisation de l'invention.

Le réseau de la figure 3 comporte un point d'accès PA faisant une interface entre un réseau d'accès LAN2 d'une part, et deux réseaux cœurs WAN1 et WAN2 d'autre part. Dans cet exemple, le point d'accès PA est un équipement de terminaison de réseau, commercialement connu en France par le nom « box ». Il dispose d'une interface de connexion LAN lui permettant de se connecter au réseau LAN2, et de deux interfaces de connexion WAN lui permettant de se connecter aux réseaux WAN1 et WAN2.

Ce point d'accès PA constitue un dispositif de fourniture d'informations conforme à l'invention.

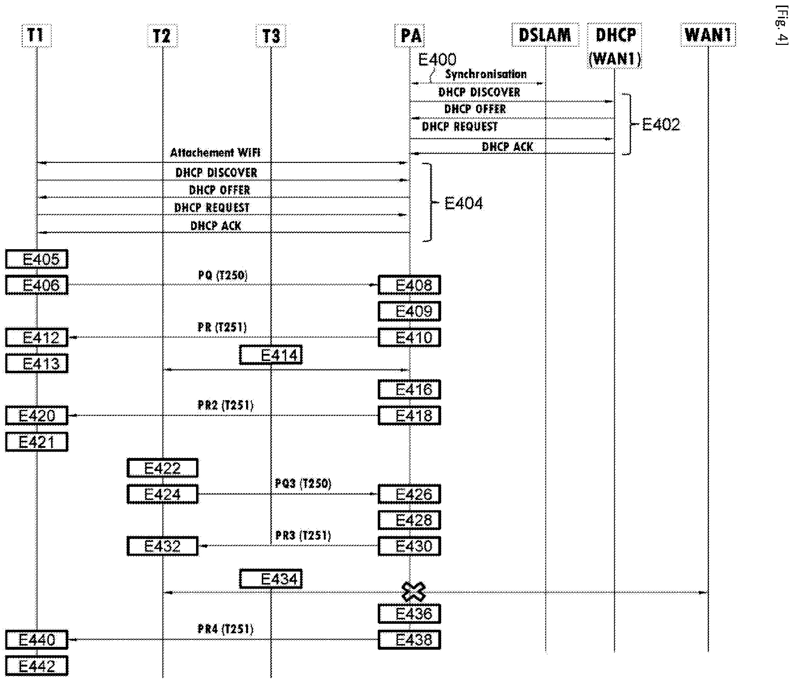

Trois terminaux T1, T2 et T3 sont connectés au dispositif PA via le réseau d'accès LAN2. Le terminal T1, conforme à l'invention, peut être connecté simultanément au réseau d'accès LAN2 et à un autre réseau d'accès LAN1. L'architecture logicielle du terminal T1 est de type de l'architecture illustrée par la figure 2, mais sa pile protocolaire TCP/IP est modifiée pour supporter des nouveaux types d'un paquet ICMP conformément à l'invention. Ces nouveaux types seront décrits par la suite en référence à la figure 4. Le terminal T1 comporte un module de sélection configuré pour sélectionner un réseau d'accès parmi les réseaux d'accès auxquels le terminal T1 peut se connecter. Le terminal T1 comporte aussi un module d'agrégation configuré pour agréger le trafic émis et/ou reçu par le terminal T1 entre au moins deux réseaux d'accès auxquels le terminal T1 peut être connecté simultanément.

Le terminal T2 ne peut se connecter qu'à un seul réseau d'accès à la fois. La pile protocolaire TCP/IP du terminal T2 est modifiée comme celle du terminal T1. Le terminal T3 est un terminal de l'art antérieur, ce terminal T3 dispose d'une pile TCP/IP de l'état de la technique.

Dans cet exemple, l'interface de connexion du dispositif PA avec le réseau WAN1 est filaire, de technologie ADSL. L'interface de connexion du dispositif PA avec le réseau WAN2 est de type radio cellulaire. Le dispositif PA est configuré pour préférer une connexion au réseau WAN1 qu'une connexion au réseau WAN2 : il ne se connecte au réseau cellulaire WAN2 que lorsque sa connexion avec le réseau filaire WAN1 est perdue ou en cas d'une qualité dégradée au-dessous d'un seuil déterminé. Le dispositif PA dispose d'une pile protocole TCP/IP de l'art antérieur au niveau de ses deux interfaces WAN.

Dans cet exemple, le terminal T1 est un téléphone de type smartphone, le réseau LAN1 est un réseau d'accès cellulaire, et le réseau LAN2 est un réseau d'accès WiFi, qui est donc de technologie différente que le réseau d'accès cellulaire. L'interface LAN du dispositif PA dispose d'une pile protocole TCP/IP qui intègre un module ICMP, et qui est modifiée par rapport à une pile de l'art antérieur pour supporter les nouveaux types d'un paquet ICMP conformément à l'invention, et qui sont décrits en ce qui suit, en référence à la figure 4.

Le dispositif PA comporte un serveur DHCP (pour « Dynamic Host Configuration Protocol » en anglais) qui attribue des adresses IP aux terminaux T1, T2 et T3 sur le réseau d'accès LAN2. Le terminal T1 possède aussi une adresse IP sur le réseau LAN1 qui lui a été attribuée par un serveur PGW (pour « Packet data network GateWay » en anglais) du réseau cellulaire.

Le dispositif PA comporte aussi une base de données interne DB qui mémorise des informations utiles au fonctionnement du dispositif PA en tant que passerelle, telle qu'une adresse IP attribuée au dispositif PA par un serveur DHCP (non présenté sur la figure) du réseau WAN1, une adresse IP attribuée au dispositif PA par un serveur PGW (non présenté sur la figure) du réseau WAN2, et des tables de type NAPT qui évoluent en fonction du trafic des terminaux T1, T2 et T3.

Les tables de type NAPT comportent des correspondances obtenues à partir d'un paquet IP ou d'une session de paquets IP: une adresse IP d'un terminal, un numéro de port source du terminal, un numéro de port destination, une adresse IP d'un serveur de destination, un identifiant d'un protocole de transport (tel que TCP, UDP ou SCTP), une adresse IP et un port source de l'interface WAN utilisée du dispositif PA.

Le dispositif PA gère différentes files de trafic par chacune de ses interfaces LAN et WAN.

Une application de navigation web est installée sur les terminaux T1 et T3. Une application de voix ou vidéo sur IP est installée sur le terminal T2.

La **figure 4** est un organigramme représentant des étapes d'un procédé de sélection mis en œuvre par le terminal T1, des étapes d'un procédé de fourniture d'informations mis en œuvre par le dispositif PA, et des étapes préliminaires à ces deux procédés, le terminal T1, le dispositif PA et les deux procédés étant conformes à l'invention.

En particulier les étapes E405, E406, E412, E413, E420, E421, E440, E442 décrites ultérieurement sont des étapes du procédé de sélection conforme à l'invention.

Les étapes E409, E410, E416, E418, E428, E430, E436, E438 décrites ultérieurement sont des étapes du procédé de fourniture d'informations, conforme à l'invention.

L'organigramme de la figure 4 est appliqué dans l'architecture réseau décrite en référence à la figure 3. Cependant, nous supposons qu'initialement, le dispositif PA n'est pas actif et qu'aucun des terminaux T1, T2 et T3 n'est connecté à ce dispositif PA et qu'aucun de ces terminaux ne possède une adresse IP sur le réseau LAN2.

Au cours d'une étape E400, le dispositif PA est mis en marche. Selon sa configuration, il se connecte au réseau WAN1. Pour cela, il échange des informations de synchronisation avec un équipement d'accès au réseau WAN1, tel qu'un équipement de type DSLAM en technologie ADSL avec par exemple un profil de synchronisation asymétrique de 2 Mbit/s dans le sens descendant et 500kbit/s dans le sens montant.

Au cours d'une ensemble d'étapes E402, le dispositif PA et en particulier son client interne DHCP établit une session avec un serveur DHCP du réseau WAN1. Le serveur DHCP du réseau WAN1 attribue une adresse IP au dispositif PA sur le réseau WAN1. Le dispositif PA enregistre cette adresse IP ainsi que les caractéristiques de synchronisation dans sa base de données DB.

Selon la configuration du dispositif PA, comme l'interface préférée de connexion au réseau WAN 1 est active, l'interface de connexion au réseau WAN2 est désactivée.

Au cours d'une étape E404, le terminal T1 se connecte au dispositif PA et se fait attribuer une adresse IP sur le réseau LAN2 tel que décrit précédemment, par le serveur DHCP du dispositif PA.

Au cours d'une étape E405 du procédé de sélection conforme à l'invention, le terminal T1 insère dans un champ « type » d'un paquet PQ dit d'interrogation de type ICMP la valeur « 250 », et dans un champ « données » de ce paquet d'interrogation PQ un type d'informations caractéristiques demandées.

Au cours d'une étape E406, le terminal T1 envoie le paquet d'interrogation PQ au dispositif PA.

Au cours d'une étape E408 du procédé de fourniture d'informations conforme à l'invention, le dispositif PA reçoit le paquet d'interrogation PQ, il déduit de la valeur « 250 » du champ « type » que ce paquet PQ comporte une demande d'informations, et il extrait le type d'informations demandées du champ « données ». Ensuite, le dispositif PA consulte sa base de données DB pour obtenir les informations demandées infoA.

Au cours d'une étape E409, le dispositif PA insère une valeur « 251 » dans un champ « type » d'un paquet PR dit d'information, de type ICMP, et insère les informations demandées infoA, caractéristiques du réseau d'accès LAN2, dans un champ « données » du paquet d'information PR.

Au cours d'une étape E410, le dispositif PA envoie le paquet d'information PR au terminal T1 connecté au réseau d'accès LAN2.

Nous notons que si le point d'accès ne met pas en œuvre le procédé de fourniture conforme à l'invention, il ne saurait pas interpréter la valeur « 250 » du champ « type ». Du coup, le point d'accès PA ignore le paquet d'interrogation PQ car le protocole ICMP indique qu'un paquet ICMP ne doit pas être répondu par un paquet ICMP en cas d'erreur. Le terminal T1 ne recevant pas de réponse, il en conclura que le point d'accès PA ne met pas en œuvre le procédé de l'invention.

Dans le mode décrit ici, le type d'informations demandées, inséré par le terminal T1 dans le champ données de paquet PQ, est « all » demandant au dispositif PA de lui fournir toutes les informations infoA qu'il dispose sur le réseau d'accès LAN2 et sur les réseaux WAN auxquels le dispositif PA peut connecter le réseau d'accès LAN2.

Dans cet exemple, les informations infoA contenues dans le champ « données » du paquet d'information PR sont les suivantes :
- Type de réseau d'accès WAN1 = ADSL
- Etat = ON
- adresse IPv4 WAN 1
- Durée de bail de l'adresse IP WAN1
- Débit de synchronisation WAN1 sens émission=500kbit/s
- Débit de synchronisation WAN1 sens réception=2Mbit/s
- Nombre d'entrée(s) NATP créés pour l'interface WAN1=0
- Nombre de file(s) en émission=1
- Taille max file émission 1 Mega octets
- Débit moyen émission =0,01 kbit/s
- Débit moyen réception =0,01 kbit/s
- Type de réseau d'accès WAN2 = 4G
- Etat=OFF
- Nombre d'adresses totales IP distribuées sur le LAN = 1
- Interface utilisée par ce terminal : Interface 1 LAN
- Type Interface 1 LAN : WiFi a/c 2,4 GHz
- Nombre de terminaux sur Interface 1 LAN = 1
- Débit moyen émission sur interface 1 LAN =0,005 kbit/s
- Débit moyen réception sur interface 1 LAN =0,005 kbit/s

Au cours d'une étape E412, le terminal T1 reçoit le paquet d'information PR. Il déduit par la valeur « 251 » dans le champ « type » de ce paquet PR qu'il s'agit d'un paquet d'information au sens de l'invention, et extrait les informations caractéristiques infoA du champ « données » du paquet PR. Ainsi, la pile protocole TCP/IP du terminal T1 remonte ces informations infoA aux modules de sélection et d'agrégation d'accès, du terminal T1.

Après analyse des informations infoA, le module de sélection considère que le débit d'accès au réseau LAN2 est suffisant dans le sens descendant (2Mbit/s) et sélectionne le réseau d'accès LAN2 (en dépit du réseau d'accès LAN1). Le module d'agrégation considère aussi que la connexion au réseau LAN2 est suffisante et n'active pas l'agrégation d'accès.

Dans un mode de réalisation, le terminal T1 demande des informations du dispositif DA d'une façon périodique. Ainsi, les étapes E405 à E412 sont mises en œuvre d'une façon périodique.

Dans cet exemple, au cours d'un ensemble d'étapes E414, similaires aux étapes E404, le terminal T2 se connecte au réseau LAN2 et se fait attribuer une adresse IP sur ce réseau LAN2 par le serveur interne DHCP du dispositif PA.

Suite au changement du nombre de terminaux connectés au réseau d'accès LAN2, le dispositif PA insère au cours d'une étape E416 similaire à l'étape E409, des nouvelles informations infoA2 dans un paquet d'information PR2, et envoie de sa propre initiative, au cours d'une étape E418 similaire à l'étape E410, le paquet d'information PR2 au terminal T1. Les informations infoA2 diffèrent des précédentes informations infoA en ce que la rubrique du « nombre d'adresses IP attribuées sur le LAN » est égal à 2. En fonction du trafic émis et/ou reçu par le terminal T1, les rubriques « débit moyen émission sur interface LAN » et « débit moyen réception sur interface LAN » peuvent aussi être différentes.

Au cours d'une étape E420, le terminal T1 reçoit ce paquet PR2 et décide en fonction des nouvelles informations obtenues infoA2, de maintenir son mode d'accès : la sélection du réseau d'accès LAN2 et la désactivation de l'agrégation d'accès.

Au cours d'étapes E422 et E424, similaires aux étapes E405 et E406 le terminal T2 insère une valeur "250" dans un champ "type" et le type d'informations demandées dans un champ "données" d'un paquet d'interrogation PQ3 et envoie ce paquet PQ3 au dispositif PA. Nous supposons que le terminal T2 demande le même type d'informations que celles demandées par le terminal T1.

A cours d'une étape E426, le dispositif PA reçoit ce paquet PQ3, insère au cours d'une étape E428 (similaire à l'étape E409) une valeur "251" dans le champ "type" d'un paquet d'information PR3 et les informations infoA2 dans le champ "données du paquet PR3, et envoie au cours d'une étape E430 (similaire à l'étape E410) le paquet d'information PR3 au terminal T2.

Le terminal T2 reçoit ces informations infoA2 au cours d'une étape E432, et les utilise pour sélectionner un codec vidéo, pour son application de vidéo sur IP, adapté à la connexion au réseau WAN1 et au trafic des autres terminaux connectés sur le réseau d'accès LAN2.

Disposant des informations de débit possible du dispositif PA et de l'usage du terminal T1 sur le réseau LAN2, l'application visiophonique du terminal T2 demande au cours d'une étape E434 l'établissement d'une session de visiophonie avec un codec nécessitant par exemple, en moyenne 450kbt/s, de sorte à ne pas dépasser le débit de synchronisation montant de l'accès ADSL du dispositif PA et à prendre en compte le trafic modéré montant du terminal T1.

L'établissement de cette session de visiophonie par le terminal T2 se traduit par la création, au niveau du dispositif PA de nouvelles entrées dans sa table de type NAPT: une entrée pour la signalisation d'appel, une entrée pour le flux RTP audio (RTP pour "Real-Time Transport Protocol" en anglais), et une entrée pour le flux RTP vidéo). Suite à ce changement (E434) d'entrées NAPT, le dispositif PA génère et envoie, au cours d'étapes E436 et E438 similaires aux étapes E416 et E418, un nouveau paquet d'informations PR4, qu'il envoie de sa propre initiative au terminal T1.

Recevant le paquet d'informations PR4 au cours d'une étape E440, le terminal T1 peut modifier sa sélection du réseau d'accès en basculant tout son trafic sur le réseau d'accès cellulaire LAN1, ou activer l'agrégation en gardant une partie de son trafic sur le réseau LAN2 et en basculant l'autre partie sur le réseau LAN1.

Supposons qu'au cours d'une étape ultérieure, le terminal T3 se connecte au réseau d'accès LAN2. Lorsque le dispositif PA détecte un changement du nombre d'entrées de type NAPT (à cause de la fin de la session de visiophonie du terminal T2 par exemple) et envoie de sa propre initiative des paquets d'informations à tous les terminaux connectés T1, T2 et T3, le terminal T3 de l'art antérieur ne peut pas interpréter le paquet d'information et va donc l'ignorer. La mise en œuvre des procédés de l'invention n'affecte pas le fonctionnement du terminal T3 de l'art antérieur.

Dans un autre mode de réalisation, le dispositif PA insère une option DHCP lorsqu'il attribue une adresse IP à un terminal pour lui informer que ce dispositif PA met en œuvre le procédé de fourniture d'informations conforme à l'invention.

Dans un autre mode de réalisation, le terminal T1 insère dans une requête DHCP DISCOVER envoyée pour se connecter au point d'accès PA, une option DHCP pour informer le dispositif PA que ce terminal T1 met en œuvre le procédé de sélection conforme à l'invention.

Dans un mode de réalisation, le dispositif PA se connecte au réseau cœur WAN2, en raison d'une perte de connexion au réseau WAN1 ou en raison d'une dégradation de la connexion au réseau WAN1 en dessous d'un seuil déterminé de qualité de connexion. Dans ce cas, le dispositif PA génère des paquets d'informations conformes à l'invention, et les envoie de sa propre initiative à tous les terminaux du réseau d'accès LAN2 auxquels il est connecté. L'envoi de ces paquets peut être en mode point à point, en mode multipoints ou en mode de diffusion.

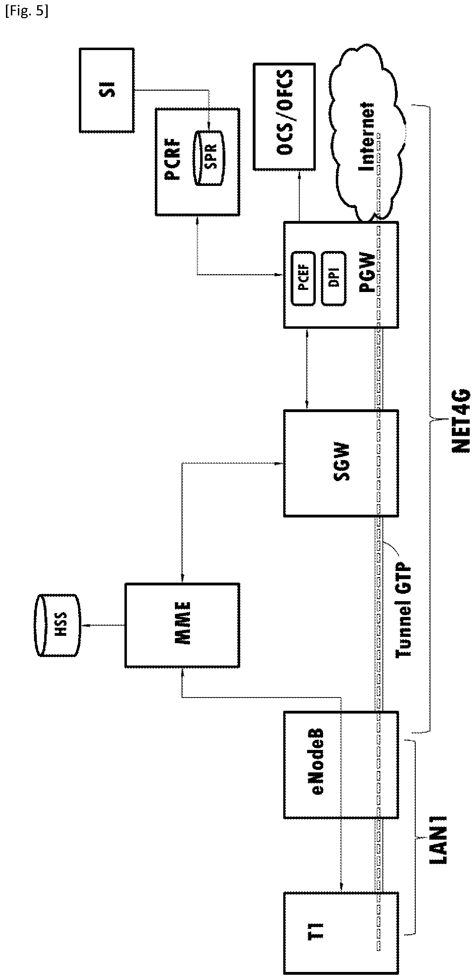

La **figure 5** illustre une architecture d'un réseau dans lequel les procédés de l'invention sont mis en œuvre selon un mode de réalisation de l'invention.

Le terminal T1, conforme à l'invention, est attaché à un réseau cellulaire de 4ème génération (4G). Il est connecté via le réseau d'accès LAN1 à une antenne eNodeB. Cette antenne eNodeB constitue une passerelle entre le réseau d'accès LAN1 et un réseau cœur NET4G.

Les étapes suivantes décrivent ce qui se déroule au niveau du réseau cellulaire, conformément à l'état de la technique, lorsque le terminal T1 se connecte au réseau d'accès LAN1.

Le terminal T1 échange des données de signalisation avec une entité MME (pour "Mobility Management Entity" en anglais). L'entité MME communique, conformément à l'état de la technique, avec un serveur HSS (pour " HSS (Home Subscriber Server" en anglais) pour identifier et authentifier l'utilisateur du terminal T1. Ensuite, une session IP-CAN (pour "Internet Protocol-Connectivity Access Network" en anglais) est établie.

Lors de l'établissement de la session IP-CAN, un routeur PGW (pour "Packet data network Gateway" en anglais) alloue une adresse IP au terminal T1 pour qu'il puisse utiliser le service Internet et un tunnel IP est établi entre T1 et l'antenne eNodeB, puis entre l'antenne eNodeB et un routeur SGW (pour « Serving GateWay » en anglais) d'ancrage du terminal T1, puis entre le routeur SGW et le routeur PGW permettant l'accès au service Internet.

Une fois que le terminal T1 dispose de l'adresse IP pour l'accès au service Internet, il peut échanger un trafic en mode bidirectionnel. Pour comptabiliser ce trafic échangé, le routeur PGW dispose d'une fonction PCEF (pour « Policy and Charging Enforcement Function » en anglais) qui communique avec une entité PCRF (pour « Policy Charging Rules Fonction » en anglais). Le PCRF obtient d'une base de données SPR (pour « Subscription Profile Repository » en anglais) le type d'abonnement de l'utilisateur du terminal T1, par exemple 5 Giga-octets par mois. Cette base de données SPR est alimentée par une application du Système d'Information (SI) de l'opérateur mobile.

Le routeur PGW est également interconnecté avec des systèmes de facturation en temps réel OCS (pour « Online Charging System» en anglais) ou non en temps réel OFCS (pour « Offline Charging System » en anglais).

Le routeur PGW intègre également une fonction DPI (pour « Deep Packet Inspection » en anglais) qui permet d'identifier des flux particuliers et prédéterminés sur la base de règles descendues par l'entité PCRF via le module PCEF pour comptabiliser ou pas ces flux.

Les étapes décrites précédemment sont conformes à l'état de la technique, et elles sont décrites ici pour présenter le contexte de mise en œuvre de l'invention.

En effet, le router PGW constitue un dispositif de fourniture d'informations infoB caractéristiques du réseau d'accès LAN1, ce dispositif PGW étant conforme à l'invention. Le dispositif PGW conforme à l'invention, dispose en particulier d'informations infoB, relatives au compte de l'utilisateur du terminal T1. Il insère dans un champ "type" d'un paquet PR de type ICMP, une valeur "253" pour indiquer que ce paquet PR est un paquet d'informations conforme à l'invention. Il insère aussi les informations caractéristiques infoB dans un champ "données" du paquet d'informations PR et envoie ce paquet PR au terminal T1.

Lorsque le terminal T1 reçoit ce paquet PR, il extrait les informations infoB de ce paquet PR et remonte les informations PR à ses modules de sélection et d'agrégation d'accès. En fonction des informations infoB, le terminal T1 peut maintenir sa connexion au réseau d'accès LAN1 uniquement, ou se déconnecter du réseau LAN1 et se connecter à un autre réseau d'accès LAN2, ou maintenir sa connexion au réseau LAN1 et se connecter aussi au réseau LAN2 en mode d'agrégation d'accès

Le dispositif PGW conforme à l'invention peut mettre en œuvre le procédé de fourniture d'informations, conforme à l'invention:
- suite à la réception d'un paquet d'interrogation PQ en provenance du terminal T1;
- à chaque remise à zéro d'un compteur de la volumétrie de trafic consommée par le terminal T1 ou par un ensemble de terminaux partageant la même souscription et comprenant le terminal T1, l'information de remise à zéro étant obtenue par le dispositif PGW en provenance du serveur PCRF;
- suite à un changement d'abonnement de l'utilisateur;
- suite à un dépassement de la volumétrie de trafic consommée par le terminal T1, d'un seuil déterminé ;
- à chaque établissement d'une session IP-CAN concernant le terminal T1;
- à chaque changement d'une caractéristique sur les performances du réseau d'accès LAN1, par exemple un changement de débit maximal possible, en cas de mobilité de la 4ème à la 3ème génération (4G/3G) ou vice versa ; et/ou
- suite à un écoulement d'une période déterminée depuis le dernier envoi d'un paquet d'information PR, dans ce cas le procédé de fourniture peut être mis en œuvre d'une façon périodique ou à des instants prédéterminés.

Dans le cas où le dispositif PGW met en œuvre le procédé de fourniture d'informations suite à un dépassement de la volumétrie de trafic consommée par le terminal T1 d'un seuil déterminé, ce seuil peut correspondre à un forfait auquel l'utilisateur a souscrit, par exemple 10 Giga octets. Alternativement ce seuil peut correspondre à un palier de consommation, le seuil peut être initialisé à une valeur déterminée et il peut être mis à jour (incrémenté par exemple) à chaque fois que le palier de consommation est atteint, par exemple à chaque 1 Giga octets consommé, compté à partir de l'initialisation ou de la dernière mise à jour du seuil.

L'antenne eNodeB transmet le paquet d'informations PR envoyé par le dispositif PGW au terminal T1.

Dans un mode de réalisation, l'antenne eNodeB insère dans le champ "données" du paquet PR, avant de transférer le paquet PR au terminal T1, des informations infoA relatives à la qualité de connexion du réseau LAN1.

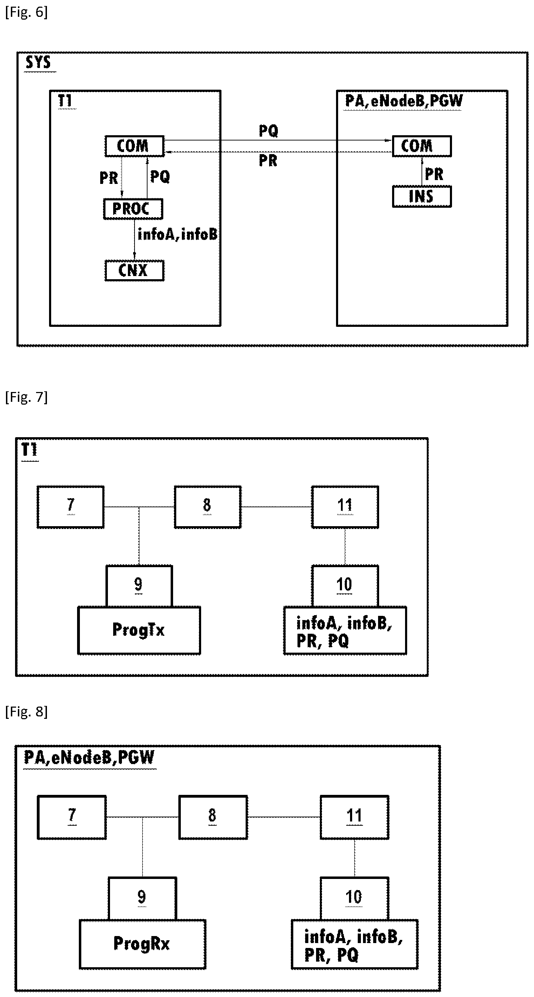

La **figure 6** représente des architectures fonctionnelles, selon un mode de réalisation de l'invention, d'un système SYS de fourniture d'informations caractéristiques, d'un terminal T1 et d'un dispositif de fourniture PA (ou eNodeB ou PGW), le système SYS, le terminal T1 et le dispositif PA étant tous conformes à l'invention.

Le système SYS comporte le terminal T1 et le dispositif PA, eNodeB ou PGW.

Le terminal T1 comporte :
-- un module de communication COM configuré pour recevoir au moins un paquet d'information PR , en provenance du dispositif PA (eNodeB, PGW) de fourniture d'informations caractéristiques infoA, infoB du réseau d'accès LAN2 (LAN1), le terminal T1 étant connecté à ce réseau d'accès;
-- un module de traitement PROC configuré pour obtenir lesdites informations caractéristiques infoA, infoB à partir du paquet d'information PR ; et
-- un module CNX de gestion de connectivité configuré pour effectuer au moins une action parmi :
   - maintenir une connexion à au moins un réseau d'accès auquel le terminal T1 est déjà connecté ;
   - connecter le terminal T1 à au moins un autre réseau d'accès.

Dans un mode de réalisation:
-- le module de traitement PROC est configuré en outre pour insérer, dans un champ d'un paquet d'interrogation PQ, un type d'informations caractéristiques demandées;
-- le module de communication COM est configuré en outre pour envoyer le paquet d'interrogation PQ audit dispositif conforme à l'invention.

Le Dispositif PA (eNodeB, PGW) de fourniture d'informations caractéristiques infoA (infoB) d'un réseau d'accès LAN2 (LAN1), est compris dans un réseau LAN2, (NET4G) comportant le réseau d'accès. Le dispositif conforme à l'invention comporte:
-- des moyens d'insertion INS configurés pour insérer les informations caractéristiques dans un champ du paquet d'information PR; et
-- des moyens de communication COM configurés pour envoyer le paquet d'information PR au terminal T1.

Dans le mode de réalisation décrit ici, le terminal T1 a l'architecture matérielle d'un ordinateur, telle qu'illustrée à la **figure 8****.**

L'architecture du terminal T1 comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du terminal T1 selon l'invention constitue un support d'enregistrement conforme à l'invention, lisible par le processeur 7 et sur lequel est enregistré ici un programme d'ordinateur ProgTx conforme à l'invention.

La mémoire 10 du terminal T1 permet d'enregistrer des variables utilisées pour l'exécution des étapes du procédé de sélection selon l'invention, telles que les informations infoA et infoB, et les paquets d'informations PR et d'interrogation PQ.

Le programme d'ordinateur ProgTx définit des modules fonctionnels et logiciels ici, configurés pour sélectionner un réseau d'accès. Ces modules fonctionnels s'appuient sur et/ou commandent les éléments matériels 7-11 du terminal T1 cités précédemment.

Dans le mode de réalisation décrit ici, le dispositif de fourniture d'information, PA, eNodeB ou PGW, a l'architecture matérielle d'un ordinateur, telle qu'illustrée à la **figure 9.**

L'architecture du dispositif PA, eNodeB ou PGW comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du dispositif PA, eNodeB ou PGW selon l'invention constitue un support d'enregistrement conforme à l'invention, lisible par le processeur 7 et sur lequel est enregistré ici un programme d'ordinateur ProgRx conforme à l'invention.

La mémoire 10 du dispositif PA, eNodeB ou PGW permet d'enregistrer des variables utilisées pour l'exécution des étapes du procédé de fourniture d'informations selon l'invention, telles que les informations infoA et infoB, et les paquets d'informations PR et d'interrogation PQ.

Le programme d'ordinateur ProgRx définit des modules fonctionnels et logiciels ici, configurés pour fournir des informations caractéristiques d'un réseau d'accès. Ces modules fonctionnels s'appuient sur et/ou commandent les éléments matériels 7-11 du dispositif PA, eNodeB ou PGW cités précédemment.

## Revendications

1. Procédé de sélection d'au moins un réseau d'accès, ledit procédé étant mis en œuvre par un terminal (T1) pouvant être connecté à plusieurs réseaux d'accès (LAN1, LAN2) et comprenant des étapes de:
-- réception (E412, E420, E440) d'au moins un paquet (PR) dit d'information, en provenance d'un dispositif (PA, eNodeB, PGW) de fourniture d'informations caractéristiques d'un dit réseau d'accès (LAN2), ledit terminal (T1) étant connecté audit réseau d'accès (LAN2) ; et
-- en fonction des informations caractéristiques (infoA, infoB) obtenues à partir dudit paquet d'information (PR), au moins une étape (E413) parmi :
- maintien (E413, E421) d'une connexion à au moins un réseau d'accès (LAN2) auquel ledit terminal est déjà connecté ; et
- connexion (E442) à au moins un autre dit réseau d'accès de technologie différente (LAN1),
ledit procédé de sélection étant **caractérisé en ce que** lesdites informations caractéristiques (infoA, infoB) d'un dit réseau d'accès comportent au moins
-- des informations (infoB) sur des paramètres d'un compte utilisateur dudit terminal (T1) sur ledit réseau d'accès ; lesdits paramètres dudit compte utilisateur comprenant au moins des informations parmi
- au moins une date de référence pour une mise à jour de comptabilisation du trafic émis et/ou reçu par ledit terminal,
- au moins une information sur sa consommation et sur la consommation d'un groupe de terminaux auquel il appartient.

2. Procédé de sélection selon la revendication 1 comportant en outre des étapes de :
-- insertion (E405), dans un champ d'un paquet dit d'interrogation (PQ), d'un type d'informations caractéristiques demandées;
-- envoi (E406) dudit paquet d'interrogation (PQ) audit dispositif (PA, eNodeB, PGW), ledit paquet d'information (PR) étant reçu (E412) en réponse audit paquet d'interrogation (PQ).

3. Procédé de fourniture d'informations caractéristiques (infoA, infoB) d'un réseau d'accès (LAN2), ledit procédé étant mis en œuvre par un dispositif (PA, eNodeB, PGW) d'un réseau (LAN2, NET4G) comportant ledit réseau d'accès (LAN2) et comprenant des étapes de:
-- insertion (E409) desdites informations caractéristiques (infoA, infoB) dans un champ (D) d'un paquet (PR) dit d'information, et
-- envoi (E410) dudit paquet (PR) d'information à un terminal (T1) connecté audit réseau d'accès (LAN2),
lesdites informations caractéristiques comportant au moins
-- une information représentative de paramètres d'un compte utilisateur dudit terminal sur ledit réseau d'accès ; lesdits paramètres dudit compte utilisateur comprenant au moins une information parmi
- une date de référence pour une mise à jour de comptabilisation du trafic émis et/ou reçu par ledit terminal,
- au moins une information sur sa consommation et sur la consommation d'un groupe de terminaux auquel il appartient.

4. Procédé de fourniture d'informations caractéristiques selon la revendication 3 **caractérisé en ce qu'**il est mis en œuvre suite à au moins un événement (EVT) parmi:
-- une réception (E408) par ledit dispositif d'un paquet, dit d'interrogation (PQ), comportant une demande desdites informations caractéristiques ;
-- un changement d'un état d'activité d'une interface de connexion dudit dispositif à un réseau WAN, ledit dispositif étant compris dans ledit réseau d'accès ;
-- une évolution d'une bande passante allouée par ledit réseau d'accès audit terminal ;
-- une détection d'un changement de volumétrie de trafic à écouler par ledit dispositif ;
-- une connexion (E414) ou un renouvellement de connexion d'un terminal sur une interface de connexion LAN dudit dispositif, ledit dispositif étant compris dans ledit réseau d'accès ;
-- un changement (E434) d'un nombre d'entrées de type NAPT au niveau dudit dispositif;
-- une réception par ledit dispositif d'un message de type Routeur Sollicitation ;
-- une détection d'un message de type Neighbor Discovery ou de type Neighbor Solicitation ;
- un écoulement d'une période déterminée depuis le dernier envoi d'un dit paquet d'information (PR)

5. Procédé selon l'une quelconque des revendications 1 à 4 dans lequel ledit paquet d'interrogation (PQ) et/ou ledit paquet d'information (PR) sont conformes au protocole ICMP.

6. Programme d'ordinateur (ProgTx, ProgRx) comportant des instructions pour l'exécution des étapes du procédé de sélection selon l'une quelconque des revendications 1 à 2 ou 5, ou des étapes du procédé de fourniture d'informations caractéristiques selon l'une quelconque des revendications 3 à 5 lorsque ledit programme est exécuté par un terminal.

7. Support d'enregistrement (7) lisible par un ordinateur sur lequel est enregistré un programme d'ordinateur selon la revendication 6.

8. Terminal (T1) pouvant être connecté à plusieurs réseaux d'accès (LAN1, LAN2) et **caractérisé en ce qu'**il comporte :
-- un module de communication (COM) configuré pour recevoir au moins un paquet (PR) dit d'information, en provenance d'un dispositif (PA, eNodeB, PGW) de fourniture d'informations caractéristiques d'un dit réseau d'accès (LAN2), ledit terminal (T1) étant connecté audit réseau d'accès (LAN2);
-- un module de traitement (PROC) configuré pour obtenir lesdites informations caractéristiques (infoA, infoB) à partir dudit paquet d'information (PR) ; et
-- un module de gestion de connectivité (CNX) configuré pour effectuer au moins une action parmi :
- maintenir une connexion à au moins un réseau d'accès (LAN2) auquel ledit terminal est déjà connecté ;
- connecter ledit terminal à au moins un autre dit réseau d'accès de technologie différente (LAN1),
ledit terminal étant **caractérisé en ce que** lesdites informations caractéristiques (infoA, infoB) d'un dit réseau d'accès comportent au moins
-- des informations (infoB) sur des paramètres d'un compte utilisateur dudit terminal (T1) sur ledit réseau d'accès ; lesdits paramètres dudit compte utilisateur comprenant au moins une information parmi
- une date de référence pour une mise à jour de comptabilisation du trafic émis et/ou reçu par ledit terminal,
- au moins une information sur sa consommation et sur la consommation d'un groupe de terminaux auquel il appartient.

9. Terminal (T1) selon la revendication 8 **caractérisé en ce que** :
- ledit module de traitement (PROC) est configuré en outre pour insérer, dans un champ d'un paquet dit d'interrogation (PQ), un type d'informations caractéristiques demandées; et **en ce que**
-- ledit module de communication est configuré en outre pour envoyer ledit paquet d'interrogation (PQ) audit dispositif (PA, eNodeB, PGW), ledit paquet d'information (PR) étant reçu en réponse audit paquet d'interrogation (PQ).

10. Dispositif (PA, eNodeB, PGW) de fourniture d'informations caractéristiques (infoA, infoB) d'un réseau d'accès (LAN2), ledit dispositif étant compris dans un réseau (LAN2, NET4G) comportant ledit réseau d'accès (LAN2) et comprenant :
-- des moyens d'insertion (INS) configurés pour insérer lesdites informations caractéristiques (infoA, infoB) dans un champ d'un paquet (PR) dit d'information; et
-- des moyens de communication (COM) configurés pour envoyer ledit paquet d'information (PR) à un terminal (T1) connecté audit réseau d'accès (LAN2),
ledit dispositif étant **caractérisé en ce que** lesdites informations caractéristiques (infoA, infoB) comportent au moins
-- une information représentative de paramètres d'un compte utilisateur dudit terminal sur ledit réseau d'accès ; lesdits paramètres dudit compte utilisateur comprenant au moins
- une date de référence pour une mise à jour de comptabilisation du trafic émis et/ou reçu par ledit terminal,
- une information sur sa consommation et sur la consommation d'un groupe de terminaux auquel il appartient.

11. Dispositif selon la revendication 10 comportant :
-- un équipement de terminaison de réseau (PA) ;
-- un point d'accès (eNodeB) d'un réseau d'accès cellulaire ; ou
-- un routeur (PGW).

12. Système (SYS) de fourniture d'informations caractéristiques (infoA, infoB) d'un réseau d'accès (LAN1, LAN2) comportant au moins un terminal selon l'une des revendications 8 ou 9 et au moins un dispositif selon l'une des revendications 10 ou 11.

## Patentansprüche

1. Verfahren zum Auswählen mindestens eines Zugangsnetzwerks, wobei das Verfahren von einem Endgerät (T1) ausgeführt wird, das mit mehreren Zugangsnetzwerken (LAN1, LAN2) verbunden werden kann, und folgende Schritte aufweist:
- - Empfangen (E412, E420, E440) mindestens eines sogenannten Informationspakets (PR) von einer Vorrichtung (PA, eNodeB, PGW) zur Bereitstellung von charakteristischen Informationen eines sogenannten Zugangsnetzwerks (LAN2), wobei das Endgerät (T1) mit dem Zugangsnetzwerk (LAN2) verbunden ist; und
- - auf der Grundlage der aus dem Informationspaket (PR) gewonnenen charakteristischen Informationen (infoA, infoB) mindestens einen der folgenden Schritte (E413):
- Aufrechterhalten (E413, E421) einer Verbindung zu mindestens einem Zugangsnetzwerk (LAN2), mit dem das Endgerät bereits verbunden ist; und
- Verbinden (E442) mit mindestens einem anderen sogenannten Zugangsnetzwerk mit unterschiedlicher Technologie (LAN1);
wobei das Auswahlverfahren **dadurch gekennzeichnet ist, dass** die charakteristischen Informationen (infoA, infoB) eines sogenannten Zugangsnetzwerks mindestens Folgendes aufweisen:
-- Informationen (infoB) über Parameter eines Benutzerkontos des Endgeräts (T1) in dem Zugangsnetzwerk, wobei die Parameter des Benutzerkontos mindestens eine der folgenden Informationen aufweisen:
- mindestens einen Stichtag für eine Aktualisierung der Verbuchung des von diesem Endgerät gesendeten und/oder empfangenen Datenverkehrs,
- mindestens eine Information zu seinem Verbrauch und zum Verbrauch einer Gruppe von Endgeräten, zu der es gehört.

2. Verfahren zum Auswählen nach Anspruch 1, das ferner die folgenden Schritte aufweist:
-- Einfügen (E405) einer Art von angeforderten charakteristischen Informationen in ein Feld eines sogenannten Abfragepakets (PQ);
-- Senden (E406) des Abfragepakets (PQ) an die Vorrichtung (PA, eNodeB, PGW), wobei das Informationspaket (PR) als Antwort auf das Abfragepaket (PQ) empfangen wird (E412).

3. Verfahren zum Bereitstellen von charakteristischen Informationen (infoA, infoB) eines Zugangsnetzwerks (LAN2), wobei das Verfahren durch eine Vorrichtung (PA, eNodeB, PGW) eines Netzwerks (LAN2, NET4G) ausgeführt wird, das das Zugangsnetzwerk (LAN2) enthält, und folgende Schritte aufweist:
-- Einfügen (E409) der charakteristischen Informationen (infoA, infoB) in ein Feld (D) eines sogenannten Informationspakets (PR), und
-- Senden (E410) des Informationspakets (PR) an ein Endgerät (T1), das mit dem Zugangsnetzwerk (LAN2) verbunden ist,
wobei die charakteristischen Informationen mindestens Folgendes enthalten:
-- eine Information, die für die Parameter eines Benutzerkontos des Endgeräts in dem Zugangsnetzwerk repräsentativ ist; wobei die Parameter des Benutzerkontos mindestens eine der folgenden Informationen aufweisen:
- einen Stichtag für eine Aktualisierung der Verbuchung des von diesem Endgerät gesendeten und/oder empfangenen Datenverkehrs,
- mindestens eine Information zu seinem Verbrauch und zum Verbrauch einer Gruppe von Endgeräten, zu der es gehört.

4. Verfahren zum Bereitstellen von charakteristischen Informationen nach Anspruch 3, **dadurch gekennzeichnet, dass** es nach mindestens einem der folgenden Ereignisse (EVT) durchgeführt wird:
-- einem Empfangen (E408) eines sogenannten Abfragepakets (PQ), das eine Anforderung der charakteristischen Informationen enthält, durch die Vorrichtung;
-- einem Ändern eines Aktivitätszustands einer Schnittstelle zum Verbinden der Vorrichtung mit einem WAN, wobei die Vorrichtung in dem Zugangsnetzwerk enthalten ist;
-- einem Entwickeln einer Bandbreite, die dem Endgerät von dem Zugangsnetzwerk zugewiesen wurde;
-- einem Erkennen einer Veränderung des von der Vorrichtung zu verarbeitenden Datenverkehrsvolumens;
-- einem Verbinden (E414) oder einem Erneuern der Verbindung eines Endgeräts mit einer LAN-Verbindungsschnittstelle der Vorrichtung, wobei die Vorrichtung in dem Zugangsnetzwerk enthalten ist;
-- einem Ändern (E434) einer Anzahl von Einträgen vom Typ NAPT an der Vorrichtung;
-- einem Empfangen einer Nachricht vom Typ "Router Solicitation" durch die Vorrichtung;
-- einem Erkennen einer Nachricht vom Typ "Neighbor Discovery" oder "Neighbor Solicitation";
- einem Verstreichen eines bestimmten Zeitraums seit dem letzten Senden eines Informationspakets (PR).

5. Verfahren nach einem der Ansprüche 1 bis 4, wobei das Abfragepaket (PQ) und/oder das Informationspaket (PR) dem Protokoll ICMP entsprechen.

6. Computerprogramm (ProgTx, ProgRx), das Anweisungen beinhaltet, die bei der Ausführung des Programms durch ein Endgerät die Schritte des Verfahrens zum Auswählen nach einem der Ansprüche 1 bis 2 oder 5 oder die Schritte des Verfahrens zum Bereitstellen von charakteristischen Informationen nach einem der Ansprüche 3 bis 5 ausführen.

7. Computerlesbares Speichermedium (7), auf dem ein Computerprogramm nach Anspruch 6 gespeichert ist.

8. Endgerät (T1), das mit mehreren Zugangsnetzwerken (LAN1, LAN2) verbunden werden kann und **dadurch gekennzeichnet ist, dass** es Folgendes aufweist:
-- ein Kommunikationsmodul (COM), das dazu ausgelegt ist, mindestens ein sogenanntes Informationspaket (PR) von einer Vorrichtung (PA, eNodeB, PGW) zur Bereitstellung von charakteristischen Informationen eines sogenannten Zugangsnetzwerks (LAN2) zu empfangen, wobei das Endgerät (T1) mit dem Zugangsnetzwerk (LAN2) verbunden ist;
-- ein Verarbeitungsmodul (PROC), das dazu ausgelegt ist, die charakteristischen Informationen (infoA, infoB) aus dem genannten Informationspaket (PR) zu erhalten; und
-- ein Konnektivitätsverwaltungsmodul (CNX), das dazu ausgelegt ist, mindestens eine der folgenden Aktionen durchzuführen:
- Aufrechterhalten einer Verbindung zu mindestens einem Zugangsnetzwerk (LAN2), mit dem das Endgerät bereits verbunden ist;
- Verbinden mit mindestens einem anderen sogenannten Zugangsnetzwerk mit unterschiedlicher Technologie (LAN1),
wobei das Endgerät **dadurch gekennzeichnet ist, dass** die charakteristischen Informationen (infoA, infoB) eines sogenannten Zugangsnetzwerks mindestens Folgendes aufweisen:
-- Informationen (infoB) über Parameter eines Benutzerkontos des Endgeräts (T1) in dem Zugangsnetzwerk, wobei die Parameter des Benutzerkontos mindestens eine der folgenden Informationen aufweisen:
- einen Stichtag für eine Aktualisierung der Verbuchung des von diesem Endgerät gesendeten und/oder empfangenen Datenverkehrs,
- mindestens eine Information zu seinem Verbrauch und zum Verbrauch einer Gruppe von Endgeräten, zu der es gehört.

9. Endgerät (T1) nach Anspruch 8, **dadurch gekennzeichnet, dass**:
- das Verarbeitungsmodul (PROC) ferner dazu ausgebildet ist, in ein Feld eines sogenannten Abfragepakets (PQ) eine Art von angeforderten charakteristischen Informationen einzufügen; und dass
-- das Kommunikationsmodul ferner dazu ausgelegt ist, das Abfragepaket (PQ) an die Vorrichtung (PA, eNodeB, PGW) zu senden, wobei das Informationspaket (PR) als Reaktion auf das Abfragepaket (PQ) empfangen wird.

10. Vorrichtung (PA, eNodeB, PGW) zum Bereitstellen von charakteristischen Informationen (infoA, infoB) eines Zugangsnetzwerks (LAN2), wobei die Vorrichtung in einem Netzwerk (LAN2, NET4G) enthalten ist, das das Zugangsnetzwerk (LAN2) enthält und Folgendes aufweist:
-- Mittel zum Einfügen (INS), die dazu ausgelegt sind, die charakteristischen Informationen (infoA, infoB) in ein Feld eines sogenannten Informationspakets (PR) einzufügen; und
-- Mittel zum Kommunizieren (COM), die dazu ausgelegt sind, das Informationspaket (PR) an ein Endgerät (T1) zu senden, das mit dem Zugangsnetzwerk (LAN2) verbunden ist, wobei die Vorrichtung **dadurch gekennzeichnet ist, dass** die charakteristischen Informationen (infoA, infoB) mindestens Folgendes aufweisen:
-- eine Information, die für die Parameter eines Benutzerkontos des Endgeräts in dem Zugangsnetzwerk repräsentativ ist; wobei die Parameter des Benutzerkontos mindestens Folgendes aufweisen:
- einen Stichtag für eine Aktualisierung der Verbuchung des von diesem Endgerät gesendeten und/oder empfangenen Datenverkehrs,
- eine Information zu seinem Verbrauch und zum Verbrauch einer Gruppe von Endgeräten, zu der es gehört.

11. Vorrichtung nach Anspruch 10, die ferner Folgendes aufweist:
-- eine Netzabschlusseinrichtung (PA);
-- einen Zugangspunkt (eNodeB) eines Mobilfunk-Zugangsnetzwerks;
- einen Router (PGW).

12. System (SYS) zum Bereitstellen von charakteristischen Informationen (infoA, infoB) eines Zugangsnetzwerks (LAN1, LAN2), das mindestens ein Endgerät nach einem der Ansprüche 8 oder 9 und mindestens eine Vorrichtung nach einem der Ansprüche 10 oder 11 aufweist.

## Claims

1. Method for selecting at least one access network, said method being implemented by a terminal (T1) connectable to a plurality of access networks (LAN1, LAN2) and comprising steps of:
-- receiving (E412, E420, E440) at least one packet (PR), called the information packet, originating from a device (PA, eNodeB, PGW) for delivering characteristic information of a said access network (LAN2), said terminal (T1) being connected to said access network (LAN2); and
-- depending on the characteristic information (infoA, infoB) obtained from said information packet (PR), at least one step (E413) among:
- keeping (E413, E421) a connection to at least one access network (LAN2) to which said terminal is already connected; and
- connecting (E442) to at least one other said access network of different technology (LAN1),
said selecting method being **characterized in that** said characteristic information (infoA, infoB) of a said access network comprises at least
-- information (infoB) on parameters of a user account of said terminal (T1) on said access network; said parameters of said user account comprising at least pieces of information among
- at least one reference date for an update to charges levied for the traffic sent and/or received by said terminal,
- at least one piece of information on its consumption and on the consumption of a group of terminals to which it belongs.

2. Selecting method according to Claim 1, further comprising steps of:
-- inserting (E405), into a field of a packet (PQ), called the query packet, a type of characteristic information requested;
-- dispatching (E406) said query packet (PQ) to said device (PA, eNodeB, PGW), said information packet (PR) being received (E412) in response to said query packet (PQ).

3. Method for delivering characteristic information (infoA, infoB) of an access network (LAN2), said method being implemented by a device (PA, eNodeB, PGW) of a network (LAN2, NET4G) comprising said access network (LAN2) and comprising steps of:
-- inserting (E409) said characteristic information (infoA, infoB) into a field (D) of a packet (PR), called the information packet, and
-- dispatching (E410) said information packet (PR) to a terminal (T1) connected to said access network (LAN2), said characteristic information comprising at least
-- a piece of information representative of parameters of a user account of said terminal on said access network; said parameters of said user account comprising at least one piece of information among
- a reference date for an update to charges levied for the traffic sent and/or received by said terminal,
- at least one piece of information on its consumption and on the consumption of a group of terminals to which it belongs.

4. Method for delivering characteristic information according to Claim 3, **characterized in that** it is implemented following at least one event (EVT) among:
-- reception (E408) by said device of a packet, called the query packet (PQ), containing a request for said characteristic information;
-- a change in an activity state of an interface for connecting said device to a WAN network, said device being contained in said access network;
-- a variation in a bandwidth allocated by said access network to said terminal;
-- detection of a change in the volume of traffic to be handled by said device;
-- connection (E414) or renewal of connection of a terminal to a LAN connection interface of said device, said device being contained in said access network;
-- a change (E434) in a number of NAPT inputs to said device;
-- reception by said device of a router-solicitation message;
-- detection of a neighbour-discovery or neighbour-solicitation message;
- an elapse of a determined period since the last time a said information packet (PR) was dispatched.

5. Method according to any of Claims 1 to 4, wherein said query packet (PQ) and/or said information packet (PR) are according to the ICMP protocol.

6. Computer program (ProgTx, ProgRx) comprising instructions for executing the steps of the selecting method according to either of Claims 1 and 2 or Claim 5, or the steps of the method for delivering characteristic information according to any of Claims 3 to 5, when said program is executed by a terminal.

7. Computer-readable recording medium (7) on which a computer program according to Claim 6 is recorded.

8. Terminal (T1) connectable to a plurality of access networks (LAN1, LAN2) and **characterized in that** it comprises:
-- a communication module (COM) configured to receive at least one packet (PR), called the information packet, originating from a device (PA, eNodeB, PGW) for delivering characteristic information of a said access network (LAN2), said terminal (T1) being connected to said access network (LAN2);
-- a processing module (PROC) configured to obtain said characteristic information (infoA, infoB) from said information packet (PR); and
-- a connectivity management module (CNX) configured to perform at least one action among:
- keeping a connection to at least one access network (LAN2) to which said terminal is already connected;
- connecting said terminal to at least one other said access network of different technology (LAN1),
said terminal being **characterized in that** said characteristic information (infoA, infoB) of a said access network comprises at least
-- information (infoB) on parameters of a user account of said terminal (T1) on said access network; said parameters of said user account comprising at least one piece of information among
- a reference date for an update to charges levied for the traffic sent and/or received by said terminal,
- at least one piece of information on its consumption and on the consumption of a group of terminals to which it belongs.

9. Terminal (T1) according to Claim 8, **characterized in that**:
- said processing module (PROC) is further configured to insert, into a field of a packet, called the query packet (PQ), a type of characteristic information requested; and **in that**
-- said communication module is further configured to dispatch said query packet (PQ) to said device (PA, eNodeB, PGW), said information packet (PR) being received in response to said query packet (PQ).

10. Device (PA, eNodeB, PGW) for delivering characteristic information (infoA, infoB) of an access network (LAN2), said device being contained in a network (LAN2, NET4G) including said access network (LAN2) and comprising:
-- inserting means (INS) configured to insert said characteristic information (infoA, infoB) into a field of a packet (PR), called the information packet, and
-- communication means (COM) configured to dispatch said information packet (PR) to a terminal (T1) connected to said access network (LAN2),
said device being **characterized in that** said characteristic information (infoA, infoB) comprises at least
-- a piece of information representative of parameters of a user account of said terminal on said access network; said parameters of said user account comprising at least
- a reference date for an update to charges levied for the traffic sent and/or received by said terminal,
- a piece of information on its consumption and on the consumption of a group of terminals to which it belongs.

11. Device according to Claim 10, comprising:
-- a network termination equipment (PA);
-- an access point (eNodeB) of a cellular access network; or
-- a router (PGW).

12. System (SYS) for delivering characteristic information (infoA, infoB) of an access network (LAN1, LAN2) comprising at least one terminal according to either of Claims 8 and 9 and at least one device according to either of Claims 10 and 11.
